# EUROPEAN PATENT APPLICATION

(11) **EP 1 150 197 A2**
(43) Date of publication of application: **31.10.2001**
(21) Application number: 01500110.0
(22) Date of filing: 25.04.2001
(51) Int. Cl.: G06F 1/00

(54) **Authentication and authorization system using smart card**

(30) Priority: 27.04.2000 ES 200001080
(71) Applicant: Telefonica, S.A., 28013 Madrid (ES)
(72) Inventor: Carpio Camara, Manuel, 28020 Madrid (ES); Lopez Guevara, Arturo, 28020 Madrid (ES); Diaz Agudo, Antonio, 28020 Madrid (ES)
(74) Representative: Sanchez del Campo Gonzalez de Ubierna, Ramon

(57) **Abstract**

Authentication and authorization system through intelligent card and only key, consisting of a system having intelligent card readers, located at different peripheral units, all them connected with an authentication and authorization server, which, on one side, identifies the person who is the owner of the card by means of a key made available in the card, which is only accesible to the system, not even to the own user, and on the other side, starting from the profile arrogated to the user, which is also recorded in the own card, the server authorizes it and gains access to certain computerized applications, with no need for the user to know the method of access to them, without entering new access keys, although so required by the applications, the own system doing it instead of the user.

## Description

### BACKGROUND OF THE INVENTION

The present specification relates to an application for a Patent of Invention referring to an authentication and authorization system through intelligent card and only key, the purpose of which is that, upon being configured as a system having intelligent card readers, located at different peripheral units, such as, for example, access to buildings, hours of work controllers, users' PCs, etc., all them being connected with an authentication and authorization server, it gets, on one side, to identify the person possessing the card thanks to a key made available in the card, which is only accessible to the system, and not even to the own user, while, on the other side, starting from the profile adjudged to the user, said profile being also recorded in the own card, the server authorizes it and gets access to certain computerized applications, with no need for the user to know the method of access to them, not entering appropriate access keys, although so required by the applications, the own system doing and performing these functions instead of the user.

### FIELD OF THE INVENTION

This invention will find application in the industry dedicated to the manufacture of apparatus, devices and ancillary elements for the computer science and telecommunications.

### RELATED ART

The applicant is not aware of the existence, at present, of an invention disclosing the characteristics incorporating that described in this specification.

### SUMMARY OF THE INVENTION

The authentication and authorization system through intelligent card and only key as proposed by the invention, configures itself as an evident novelty in its application field, offering the appropiate tools to establish necessary links among the elements of the system, and, at the same time, it configures as a unique central authentication service for all users and applications, including a physical access control.

In a most definite way, the authentication and authorization system through intelligent card and only key of the invention, is configured starting from an architecture based on a unit acting as an identification, authentication and authorization server, connected by means of a communication network, on one side, to peripheral units used by many users (such as the access to buildings), and to other units used by an only user, each of which has the corresponding reading element and reading method for intelligent card, i.e, a chip card; and on the other side, the identification and authorization server is connected to public key infrastructures and different computerized application servers to which a user wants to accede.

The invention covers the needs of a physical access control to offices, as well as the logic access control to computerized applications, including, on one side, the person identification, i.e, the authentication, and on the other side, a control of access permits to each application, i.e, the authorization.

The system involves management of users and authorizations in a coordinated way in all applications, and, at the same time, acts as an auditing, i.e, it is capable of obtaining traces or evidences allowing the behaviour carried out by a user within an application to be determined.

The invention is based on the use of cryptographic techniques of public key, and it is also based on intelligent cards as an item identifying the person possessing it.

The authentication and authorization system acts also as an agglutinator of the elements composing the system, erecting a punctual client who takes charge of establishing links among the different parts, which are:
- Intelligent card, and
- Reader thereof.

In collaboration with the mentioned elements, the invention also contemplates the use of the following. to wit:
- Physical access control elements,
- Authentication and authorization server,
- Public key infrastructure (PKI), and
- Computerized applications.

The invention combines, on a same support of intelligent card, the keys of physical access to installations, and of logic access to computerization systems of the organization, using for this purpose, two recorded applications in said support managing the use of these keys, also recorded in protected portions of the support, managing the use of these keys, also recorded in protected portions of the support.

The invention relies on units of only user, for example: PC of client, with facilities for managing, on one side, the communication with the reader of intelligent card, and, on the other side, managing the communication with the Directory X.500, authorization and identification server, where the user's credentials or passewords reside in.

It is also easily configured so that the card requests or not the PIN, as well as to block the PC or not when the card is extracted, to have the safescreen jumped to a determined time after extracting the card, etc.

In short, the invention allows to act on the PC according to the configuration had, depending on the events coinciding with the card reader, and on the other side, it stores in a volatile RAM, already encoded in order to avoid their interception, the credentials of that user in particular.

Also, this module performs the function of single sign-on (SS0) or unique password, together with the Directory X.500, on the applications.

The novelty lies on the fact that up to now there are not any commercial implementations of SSO making basically use of standards, without having recourse to any proprietary technology, excepting, of course, the functinal elements performed in the place of the user.

### DESCRIPTION OF THE DRAWINGS

In order to complement this description and aid to a better understanding of the characteristics of the invention, the appending sheet of drawings, which is a part of this specification, shows, by way of illustrative and non-limiting example, the following:

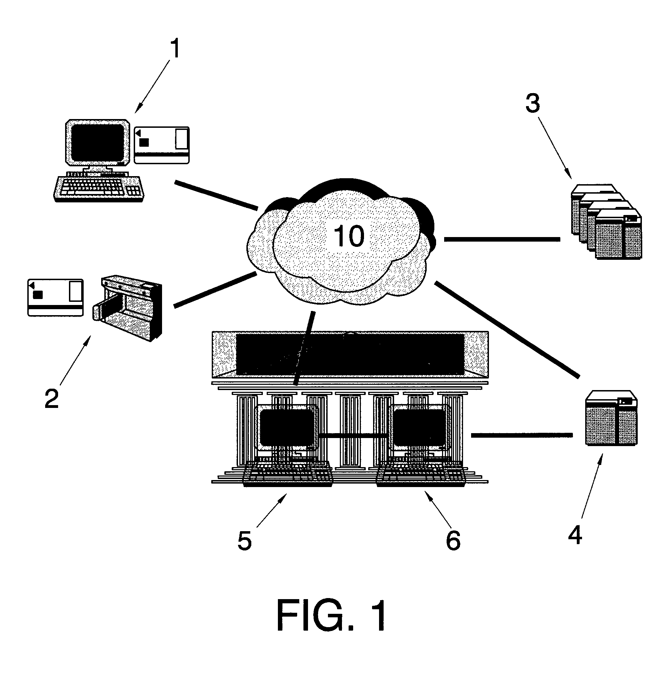

Figure 1 corresponds to a schematic representation of several elements configuring the invention, related to a authentication and authorization system through intelligent card and only key.

### DESCRIPTION OF THE PREFERRED EMBODIMENT OF THE INVEN+ TION

From figure 1, it can be seen that the authentication and authorization system through intelligent card and only key is constituted starting from a user' computer (1), fitted with its corresponding card, as well as a control of physical access (2), the elements (1) and (2) being connected to a communication network (3), and this, in turn, is connected with computerized applications servers (3), and also with an authentication and authorization server (4), which, in turn, is connected to a certification authority (6) and record authority (5), both configured as two computers having their corresponding keyboard.

The user (1) offers the relative tools in order to establish the necessary links among the elements configuring the system, producing a unique central authentication service for all users and applications, including a physical access control (2)

The invention uses cryptographic techniques with authentication on the level of application.

## Claims

1. An authentication and authorization system, thru intelligent card and only key, of those constituted by an architecture based on a unit acting as an identification, authentication and authorization server, connected, through a communication network, on one side, to peripheral units used by multiusers, such as, for example, the access to buildings, and to others units used by only one user, each of which has a corresponding reading element and the corresponding method for performing said read for an intelligent card, such as a chip card, and on the other side, the identification and authorization server is connected with public key infrastructures and different computerized application servers to which a user wishes to accede, **characterized in that** it combines, on a same intelligent card support, keys of physical access to installations, and logic access to computerized systems of the organization, using for this purpose two applications recorded in said support managing the use of these keys, also recorded in protected portions of the support.

2. An authentication and authorization system, thru intelligent card and only key, according to claim 1, - **characterized in that** the only user units, or client PC, have means for, on one side, managing the communication with the intelligent card reader, and on the other side, managing the communication with the Directory X.500, configured as an authorization or identification server, where the credentials or passwords of user reside in.

3. An authentication and authorization system, thru intelligent card and only key, according to claim 1, - **characterized in that** it can be easily configured so that the card requires or not the PIN, to block the PC or not when the card is extracted, as well as to have the safescreen jumped to a determined time after extracting the card, etc.

4. An authentication and authorization system thru intelligent card and only key, according to claim 1, **characterized in that** it can act on the PC according to the configuration had, depending on the events in the card reader.

5. An authentication and authorization system thru intelligent card and only key, according to claim 1, **characterized in that** it stores in a volatile RAM, already encoded to avoid their interception, the credentials of that user in particular.

6. An authentication and authorization system thru intelligent card and only key, according to claim 1, **characterized in that** it performs the function of single sign-on (SSO), or unique password, together with the Directory X.500, on the applications.

7. An authentication and authorization system thru intelligent card and only key, according to claim 1, **characterized in that** it performs, without intervening the user, the access to non-modifiable computerized applications by the automatic write of the key or scripting.

8. An authentication and authorization system thru intelligent card and only key, according to any of the preceding claims, **characterized in that** by configuring in an adequate way the modifiable computerized applications, said applications can be entered without intervening the user, by means of the automatic write of the entry keys to said applications.

9. An authentication and authorization system thru intelligent card and only key, according to any of the preceding claims, **characterized in that** the identification made of the user is configured so that it is accepted as certification and electronic signature in systems with applications in a native mode of challenge/answer.

10. An authentication and authorization system thru intelligent card and only key, according to claims 7, 8 and 9, **characterized in that**, independently of the strategy to carry out as a function of the applications to be acceded, the interface is unique and diaphanous to the user.
